# EUROPÄISCHE PATENTSCHRIFT

(11) **EP 1 592 902 B1**
(45) Veröffentlichungstag und Bekanntmachung des Hinweises auf die Patenterteilung: **19.02.2014**
(21) Anmeldenummer: 03782164.2
(22) Anmeldetag: 12.12.2003
(51) Int. Cl.: F16J 15/08

(54) **FLACHDICHTUNG**
FLAT GASKET
GARNITURE D'ETANCHEITE PLATE

(30) Priorität: 15.02.2003 DE 10306416
(43) Veröffentlichungstag der Anmeldung: 09.11.2005
(73) Patentinhaber: Federal-Mogul Sealing Systems GmbH, 57562 Herdorf (DE)
(72) Erfinder: KLINNER, Manfred, 53844 Troisdorf (DE)
(74) Vertreter: Döpp, Ludger
(86) Internationale Anmeldenummer: PCT/DE2003/004106
(87) Internationale Veröffentlichungsnummer: WO 2004/072516

(56) Entgegenhaltungen:
- EP-A- 0 508 045
- DE-C- 19 512 650

## Beschreibung

Die Erfindung betrifft eine Flachdichtung zum Einbau zwischen Bauteilen, die im Betriebszustand temperaturbedingten Relativbewegungen unterworfen sind, insbesondere Zylinderkopfdichtung für eine Brennkraftmaschine.

Zur Abdichtung gegen Medien, wie zum Beispiel bei Brennraumabdichtungen von Brennkraftmaschinen, werden zwischen den Dichtflächen Abdichtelemente benötigt. Selbige sind in der Regel durch Flachdichtungen wie, Zylinderkopfdichtungen, ausgebildet. Heutige Brennkraftmaschinen werden vielfach aus einem aus Gußmaterialien bestehenden Motorblock und einem aus einem Leichtmetall bestehenden Zylinderkopf hergestellt. Bedingt durch unterschiedliche thermische Ausdehnungen der genannten Werkstoffe kommt es zwischen dem Motorblock und dem Zylinderkopf zu Schiebebewegungen, wobei selbige bisher durch die in der Regel zwar mehrlagig aber einstückig ausgebildeten Zylinderkopfdichtungen aufgenommen wird. Infolge der unterschiedlichen Betriebstemperaturen, der denen unterworfenen Brennkraftmaschinen, fallen die Schiebebewegungen mehr oder weniger groß aus, wodurch ein erhöhter Reibverschleiß, bedingt durch die Relativbewegung des Motorblockes gegenüber dem Zylinderkopf, bzw. umgekehrt, an den zu dichtenden Flächen auftritt, der zu Undichtigkeiten führen kann.

Es wurde zwar versucht durch Beschichtung der Oberflächen eine verbesserte Gleitbewegung der Dichtflächen über der Dichtung herbeizuführen, was sich jedoch in der Praxis nicht bewährt hat.

Durch die DE-C 195 12 650 ist eine Zylinderkopfdichtung für eine Brennkraftmaschine bekannt geworden, die einen mehrlagigen Aufbau hat, wobei insbesondere brennraumseitig zwischen den einzelnen Lagen Drahtringe angeordnet werden, so dass die betroffenen Lagen eine Art Wälzbewegung durchführen und die Relativbewegung zwischen Motorblock und Zylinderkopf somit in den Bereich der Dichtung verlagert werden. Der konstruktive Aufbau dieser Zylinderkopfdichtung wird hierbei als aufwendig angesehen. Infolge der Verpressung bei der Montage wird sich der Drahtring in das umgebende Dichtungsmaterial eingraben, wodurch eine Wälzbewegung der Lagen bei Relativbewegung der umgebenden Bauteile erschwert wird.

Der Erfindung liegt die Aufgabe zugrunde eine Flachdichtung, insbesondere eine Zylinderkopfdichtung, bereitzustellen, die einen gegenüber dem Stand der Technik vereinfachten Aufbau hat und ebenfalls eine von den betroffenen Bauteilen entkoppelte Relativbewegung innerhalb der Dichtung ermöglicht.

Diese Aufgabe wird gelöst durch eine Flachdichtung zum Einbau zwischen Bauteilen, die im Betriebszustand tempertaturbedingten Relativbewegungen unterworfen sind, insbesondere Zylinderkopfdichtungen, für eine Brennkraftmaschine gebildet durch mehrere einzelne Dichtpakete, von denen mindestens eines einem jeden Bauteil zugeordnet ist und zumindest im Betriebszustand ausschließlich zwischen Berührungsebenen einzelner Dichtpakete eine gleitende Relativbewegung gegeben ist. Vorteilhafte Weiterbildungen des Erfindungsgegenstandes sind den Unteransprüchen zu entnehmen.

Durch die Verwendung von mindestens zwei separaten Dichtpaketen als Flachdichtung, insbesondere Zylinderkopfdichtungen, wird eine Relativbewegung innerhalb der Dichtung ermöglicht. Gegenüber dem Stand der Technik wird ein einfacherer Aufbau gewährleistet, da keine separaten, eine Wälzbewegung ermöglichenden Drahtkörper zum Einsatz gelangen müssen. Die Schiebebewegung der betroffenen Bauteile, insbesondere der Relativbewegung zwischen Zylinderkopf und Motorblock, wird somit in Form besagter Gleitbewegung in die Dichtung hinein verlagert.

Die einzelnen Dichtpakete können, müssen jedoch nicht, zunächst aus Montagegründen miteinander verbunden werden. Dies kann beispielsweise durch eine unter Betriebsbedingungen lösbare oder aber auch flexible Verbindung, z.B. durch einen Klebstoff oder eine Dichtmasse, der einzelnen Dichtpakete untereinander herbeigeführt werden. In jedem Fall ist jedoch sicherzustellen, dass unter Betriebsbedingungen eine relative Bewegung der einzelnen Dichtpakete zueinander möglich ist.

Die Dichtwirkung kommt, wie üblich, über den Kontakt der Flachdichtung zu den einzelnen Dichtflächen zustande. Infolge der besseren Oberflächenqualität innerhalb der Flachdichtung, im Vergleich zu den bearbeiteten rauen Oberflächen der Dichtflächen der betroffenen Bauteile, wie Zylinderkopf und Motorblock, ist die Haftung innerhalb der Flachdichtung geringer, da zwischen den zu dichtenden Oberflächen und der Flachdichtung in der Regel ein Klammereffekt erreicht wird.

Mit dem Erfindungsgegenstand wird eine Vielzahl technischer Möglichkeiten bezüglich des Aufbaus der Flachdichtungen, insbesondere der Zylinderkopfdichtung ermöglicht. Die Flachdichtung kann allgemein überall dort eingesetzt werden, wo Bauteile unterschiedlicher Werkstoffe zum Einsatz gelangen, die hohen Temperaturen ausgesetzt sind und einer entsprechenden Abdichtung bedürfen.

Werden die einzelnen Dichtpakete durch mehrere Blechkörper gebildet, können selbige fest miteinander, insbesondere durch Schweißen, verbunden werden. Alternative Verbindungsmöglichkeiten, wie Nieten, Kleben oder dergleichen, sind jedoch ebenfalls denkbar.

Wie bei herkömmlichen Flachdichtungen, insbesondere Zylinderkopfdichtungen, besteht die Möglichkeit Sickenbereiche vorzusehen. Da selbige nicht erfindungsrelevant sind, wird an dieser Stelle auch nicht weiter darauf eingegangen.

Der prinzipielle Aufbau der erfindungsgemäßen Flachdichtung ist in den Zeichnungen dargestellt und wird wie folgt beschrieben. Es zeigen:
- Figur 1: Teilansicht einer Zylinderkopfdichtung
- Figuren 2 und 3: Darstellung einzelner Dichtpakete zur Bildung der Zylinderkopfdichtung gemäß Figur 1
- Figur 4: Prinzipskizze eines möglichen Einbauzustandes zwischen einem Motorblock und einem Zylinderkopf

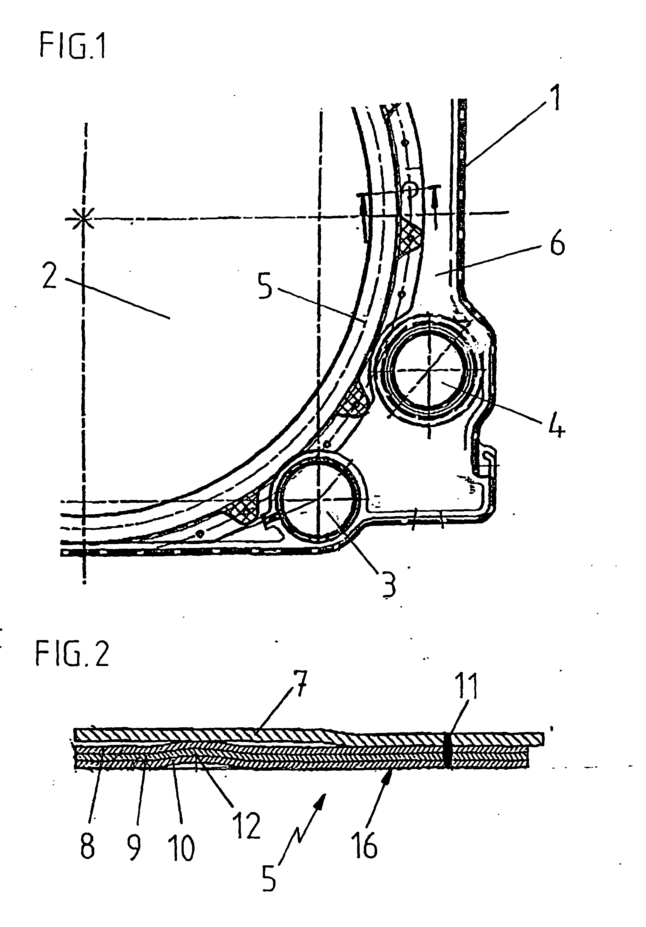

Figur 1 zeigt als Prinzipskizze einen Ausschnitt aus einer Zylinderkopfdichtung 1, beinhaltend eine brennraumseitige Durchgangsöffnung 2 sowie Mediendurchtrittsöffnungen 3, 4. Die Bezugszeichen 5 und 6 zeigen prinzipiell, dass die Zylinderkopfdichtung 1 aus mehreren einzelnen Dichtpaketen gebildet ist, was in den folgenden Figuren näher beschrieben wird.

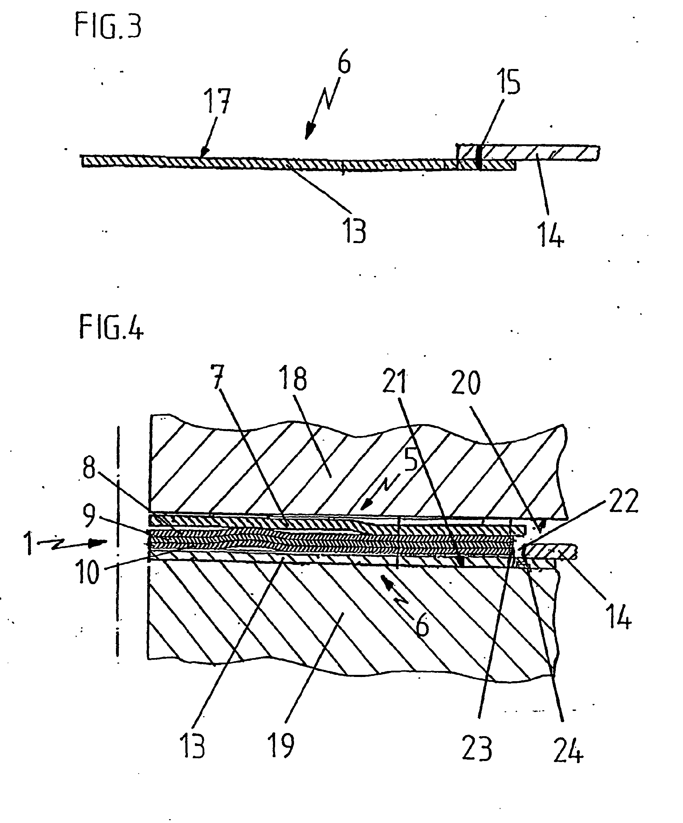

Die Figuren 2 und 3 zeigen die einzelnen Dichtpakete 5, 6. Das Dichtpaket 5 besteht aus einer ersten Metalllage 7, die eine Trägerplatte bildet und dem hier nicht weiter dargestellten ersten Bauteil zugewandt ist.

Mit der Trägerplatte 7 sind weitere Metalllagen 8, 9, 10 durch eine Schweißverbindung 11 verbunden. In bekannter Weise sind die Metalllagen 8 bis 10 mit Sickenbereichen 12 versehen. Das zweite Dichtpaket 6 wird gebildet durch eine metallische Trägerplatte 13, die dem zweiten Bauteil zugewandt ist. Die Trägerplatte 13 wirkt mit einem weiteren metallischen Element 14 zusammen und wird mit selbigem über eine Schweißverbindung 15 fest verbunden. Diese einzelnen Dichtpakete 5, 6 werden lose ineinander gelegt und gegenüber den Bauteilen positioniert. Zum Zwecke des Transportes oder der Lagerhaltung können die einzelnen Dichtpakte 5, 6 beispielsweise elastisch miteinander verbunden werden. Bedingt durch die hohen Temperaturen im Betriebszustand wird diese elastische Verbindung dann aufgelöst, so dass eine gleitende Relativbewegung der einzelnen Dichtpakete 5, 6 gegeneinander ermöglicht wird. Die einzelnen Dichtpakete 5, 6 weisen einander zugewandte Berührungsebenen 16, 17 auf, zwischen denen die gleitende Relativbewegung stattfinden kann.

Figur 4 zeigt einen möglichen Einbauzustand der Zylinderkopfdichtung 1. Das Bezugszeichen 18 soll einen aus einem Leichtmetall bestehenden Zylinderkopf und das Bezugszeichen 19 einen aus Gußeisen bestehenden Motorblock darstellen. Erkennbar ist, dass das Dichtpaket 5 respektive die metallische Trägerplatte 7 der Dichtfläche 20 des Zylinderkopfes 18 zugewandt ist, während das Dichtpaket 6 respektive die Trägerplatte 13 der Dichtfläche 21 des Motorblockes 19 zugeordnet ist. Die Dichtpakete 5, 6 liegen ineinander, wobei ein Freiraum 22 gebildet ist, der einen Verschiebeweg der einzelnen Dichtpakete 5, 6 gegeneinander definiert.

Wie im Stand der Technik gemäß DE-C 195 12 650 angeführt, kann der Verschiebeweg bis zu 0,7 mm betragen, so dass der Freiraum 22 in entsprechender Weise toleranzmäßig auszulegen ist, ohne dass es zu Berührungen der einander gegenüberliegenden Kanten 23, 24 einerseits der Metalllagen 8, 9, 10 und andererseits des Metallelementes 14 kommen kann.

## Patentansprüche

1. Flachdichtung zum Einbau zwischen Bauteilen (18, 19), die im Betriebszustand temperaturbedingten Relativbewegungen unterworfen sind, insbesondere Zylinderkopfdichtung (1) für eine Brennkraftmaschine, gebildet durch mehrere einzelne Dichtpakete (5, 6), von denen mindestens eines einem jedem Bauteil (18, 19) zugeordnet ist und **dadurch gekennzeichnet, dass** zumindest im Betriebszustand ausschließlich zwischen Berührungsebenen (16, 17) einzelner Dichtpakete (5, 6) eine gleitende Relativbewegung gegeben ist.

2. Flachdichtung nach Anspruch 1, **dadurch gekennzeichnet, dass** die einzelnen Dichtpakete (5, 6) durch einzelne oder mehrere miteinander verbundene Blechkörper (7, 8, 9, 10 bzw. 13, 14) bestehen, und dass die Dichtpakete (5, 6) lose ineinandergelegt zwischen den Bauteilen (18, 19) in zentrierter Form positioniert sind.

3. Flachdichtung nach Anspruch 1 oder 2, **dadurch gekennzeichnet, dass** die Dichtpakete (5, 6) aus Transport- und Montagegründen lösbar miteinander verbindbar sind, wobei die Verbindung im Betriebszustand der Bauteile (18, 19) gelöst ist.

4. Flachdichtung nach einem der Ansprüche 1 bis 3, **dadurch gekennzeichnet, dass** die Verbindung elastischer Art und insbesondere durch partielles Kleben herbeigeführt ist.

5. Flachdichtung nach einem der Ansprüche 1 bis 4, **dadurch gekennzeichnet, dass** bei Verwendung mehrerer Blechkörper (7 bis 10 bzw. 13, 14) für ein einzelnes Dichtpaket (5 bzw. 6), die Blechkörper (7 bis 10 bzw. 13, 14), insbesondere durch Schweißen (11, 15), fest miteinander verbunden sind.

6. Flachdichtung nach einem der Ansprüche 1 bis 5, **dadurch gekennzeichnet, dass** bei ineinander gelegten, zentrierten Dichtpaketen (5, 6) gebildete Begrenzungskanten (23, 24) einen solchen Abstand zueinander aufweisen, dass in Abhängigkeit der für die Bauteile (18, 19) verwendeten Werkstoffe der dann gegebene maximale Verschiebeweg zwischen den Bauteilen (18, 19) ohne Zwängungen im Bereich der Dichtpakete (5, 6) einhaltbar ist.

## Claims

1. A flat packing for being inserted between components (18, 19) which are subject to temperature related relative movements in the operating state, in particular a cylinder head gasket (1) for an internal combustion engine, formed by several individual sealing packets (5, 6), at least one of which is allocated to each component (18, 19) and **characterized in that** at least in the operating state a sliding relative movement exclusively exists between tangent planes (16, 17) of individual sealing packets (5, 6).

2. A flat packing according to claim 1, **characterized in that** the individual sealing packets (5, 6) are composed of individual or several sheet metal bodies (7, 8, 9, 10 or 13, 14) which are connected to each other and that the sealing packets (5, 6) are loosely placed one into the other and positioned between the components (18, 19) in a centered manner.

3. A flat packing according to claim 1 or 2, **characterized in that** the sealing packets (5, 6) can be detachably connected to each other for transport and assembly reasons, wherein the connection is loosened in the operating state of the components (18, 19).

4. A flat packing according to one of the claims 1 through 3, **characterized in that** the connection is elastic and in particular realized by partial gluing.

5. A flat packing according to one of the claims 1 through 4, **characterized in that** if several sheet metal bodies (7 through 10 respectively 13, 14) are used for an individual sealing packet (5 or 6), the sheet metal bodies (7 through 10 respectively 13, 14) are firmly connected to each other, in particular by welding (11, 15).

6. A flat packing according to one of the claims 1 through 5, **characterized in that** in the case of centered sealing packets (5, 6) which are placed one into the other, formed limiting edges (23, 24) present such a mutual distance that in dependence on the materials used for the components (18, 19) the then given maximum moving distance between the components (18, 19) can be observed without jamming in the area of the sealing packets (5, 6).

## Revendications

1. Garniture plate pour l'insertion entre des composants de construction (18, 19) qui sont soumis aux déplacements relatifs en raison des températures, notamment garniture de culasse de cylindre (1) pour un moteur à combustion interne, formée par plusieurs paquets d'étanchéité (5, 6) individuels dont au moins un est attribué à chaque composant de construction (18, 19) et **caractérisé en ce qu'**au moins en état de marche un mouvement relatif glissant est exclusivement donné entre des plans tangents (16, 17) des paquets d'étanchéité individuels.

2. Garniture plate selon la revendication 1, **caractérisé en ce que** les paquets d'étanchéité individuels (5, 6) se composent des corps en tôle (7, 8, 9, 10 respectivement 13, 14) individuels ou de plusieurs corps en tôle reliés les uns aux autres et que les paquets d'étanchéité (5, 6) sont placés les uns dans les autres de manière amovible et sont positionnés de façon centrée entre les composants de construction (18, 19).

3. Garniture plate selon la revendication 1 ou 2, **caractérisé en ce que** les paquets d'étanchéité (5, 6) sont susceptibles d'être reliés les uns aux autres de manière amovible pour des raisons de transport et de montage, la connexion étant desserrée en état de marche des composants de construction (18, 19).

4. Garniture plate selon l'une des revendications 1 à 3, **caractérisé en ce que** la connexion est élastique et notamment réalisé par collage partiel.

5. Garniture plate selon l'une des revendications 1 à 4, **caractérisé en ce que** si on utilise plusieurs corps en tôle (7 à 10 respectivement 13, 14) pour un paquet d'étanchéité (5 ou 6) individuel, les corps en tôle (7 à 10 respectivement 13, 14) sont fermement reliés les uns aux autres, notamment par soudage (11, 15).

6. Garniture plate selon l'une des revendications 1 à 5, **caractérisé en ce que** s'il s'agit des paquets d'étanchéité (5, 6) centrés et placés les uns dans les autres, des arêtes limitatives (23, 24) formées comprennent une telle distance mutuelle entre elles qu'en fonction des matières utilisées pour les composants de construction (18, 19) la distance maximale de déplacement alors donnée entre les composants de construction (18, 19) peut être observée sans serrages au niveau des paquets d'étanchéité (5, 6).
